# EUROPEAN PATENT APPLICATION

(11) **EP 3 506 045 A1**
(43) Date of publication of application: **03.07.2019**
(21) Application number: 18207966.5
(22) Date of filing: 23.11.2018
(51) Int. Cl.: G05G 9/047, B62D 1/12, G05G 5/05

(54) **HANDLEBAR AND WORKING MACHINE**

(30) Priority: 28.12.2017 JP 2017254267
(71) Applicant: HONDA MOTOR CO., LTD., Tokyo 107-8556 (JP)
(72) Inventor: Namiki, Takuma, Saitama, 351-0193 (JP); Kohigashi, Kenta, Saitama, 351-0193 (JP); Yamazaki, Nobuo, Saitama, 351-0193 (JP)
(74) Representative: Beder, Jens

(57) **Abstract**

A handlebar for a working machine, comprising a handlebar body, a first rotation mechanism configured to rotate the handlebar body in a first direction, and a second rotation mechanism configured to rotate the handlebar body in a second direction crossing the first direction, wherein the handlebar body is fixed to the second rotation mechanism so as to be rotatable in the second direction, and the second rotation mechanism is fixed to the first rotation mechanism so as to be rotatable in the first direction.

## Description

### BACKGROUND OF THE INVENTION

### Field of the Invention

The present invention mainly relates to a handlebar for a working machine.

### Description of the Related Art

Some vehicles allow a user to perform the driving operation of a vehicle using a handlebar that is also called a joystick or the like (see Japanese Patent Laid-Open No. 2002-229656). For example, the user (a driver or an operator) can perform the driving operation by tilting the handlebar in the vehicle front-back direction or the vehicle left-right direction.

Many working machines such as a lawn mower and a snow plow perform a work in a predetermined area while advancing at a relatively low speed and, after that, turn or change the traveling direction while maintaining the speed and perform a work in the next area.

Some working machines include a handlebar. With a handlebar having a conventional structure, for example, when the user is changing or adjusting the operation amount in the vehicle left-right direction in turning, the operation amount in the vehicle front-back direction is also changed in some cases, and the working machine may travel on a path unintended by the user. Hence, to improve the operability, the structure of the handlebar needs to be improved.

### SUMMARY OF THE INVENTION

The present invention improves the operability of a handlebar by a relatively simple arrangement.

The present invention in its first aspect provides a handlebar as specified in claims 1 to 6.

The present invention in its second aspect provides a working machine as specified in claims 7 to 10.

Further features of the present invention will become apparent from the following description of exemplary embodiments with reference to the attached drawings.

### BRIEF DESCRIPTION OF THE DRAWINGS

Fig. 1 is a block diagram for explaining an example of the system configuration of a working machine;
Fig. 2A is a perspective view for explaining an example of the structure of a handlebar;
Fig. 2B is a perspective view for explaining an example of the structure of the handlebar;
Fig. 3A is a front view for explaining an example of the structure of the handlebar;
Fig. 3B is a right side view for explaining an example of the structure of the handlebar;
Fig. 3C is a left side view for explaining an example of the structure of the handlebar;
Fig. 3D is a top view (plan view) for explaining an example of the structure of the handlebar;
Fig. 3E is a bottom view for explaining an example of the structure of the handlebar;
Fig. 3F is a back view for explaining an example of the structure of the handlebar; and
Fig. 4 is a sectional view for explaining an example of the internal structure of the handlebar.

### DESCRIPTION OF THE EMBODIMENTS

An embodiment of the present invention will now be described with reference to the accompanying drawings. Note that the drawings are schematic views showing structures or arrangements according to the embodiment, and the dimensions of members shown in the drawings do not necessarily reflect the actuality. In addition, the same reference numerals denote the same members or same constituent elements in the drawings, and a repetitive description thereof will be omitted.

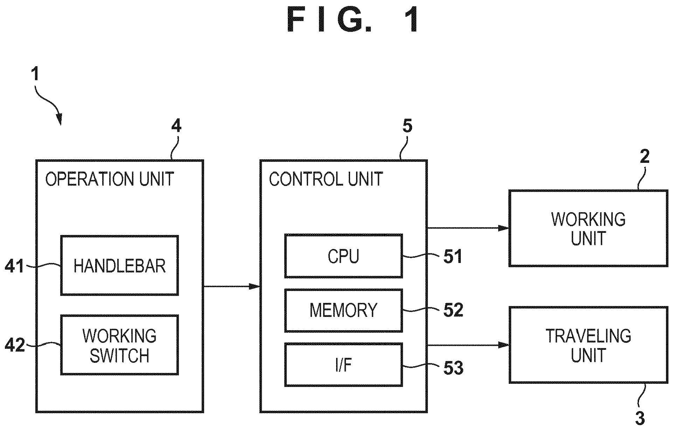

Fig. 1 is a block diagram for explaining an example of the system configuration of a working machine 1 according to this embodiment. The working machine 1 includes a working unit 2, a traveling unit 3, an operation unit 4, and a control unit 5. Note that typical examples of the working machine 1 are a lawn mower and a snow plow. Vehicles for farm work such as a cultivator are also included in the concept of the working machine.

The working unit 2 includes a mechanism configured to perform a predetermined work. For example, if the working machine 1 is a lawn mower, the working unit 2 performs a mowing work using a blade. Additionally, for example, if the working machine 1 is a snow plow, the working unit 2 performs a snow removal work using an auger and a shooter.

The traveling unit 3 includes wheels, caterpillars, or the like and allows the working machine 1 to travel (advance, retreat, turn, and the like). In this embodiment, the working machine 1 is of an autonomously traveling type including a driver's seat, and the traveling unit 3 includes three or more wheels. As another embodiment, the working machine 1 may be of a hand push type. In this case, the traveling unit 3 can include, for example, one or more wheels.

The operation unit 4 includes a handlebar 41 and a working switch 42. The handlebar 41 is a lever-type operation element. The user can perform the driving operation of the working machine 1 by driving the traveling unit 3 using the handlebar 41. For example, when the handlebar 41 is rotated in the vehicle front-back direction, the working machine 1 can be advanced/retreated, and when the handlebar 41 is rotated in the vehicle left-right direction, the working machine 1 can be turned left/right, as will be described later in detail. In addition, the working switch 42 is a button-type operation element. The user presses the working switch 42 to drive the working unit 2, thereby performing a work such as mowing.

The control unit 5 is an ECU (Electronic Control Unit) including, for example, a CPU 51, a memory 52, and an external interface 53, and drives and controls the working unit 2 and the traveling unit 3 based on operation contents input to the operation unit 4 by the user.

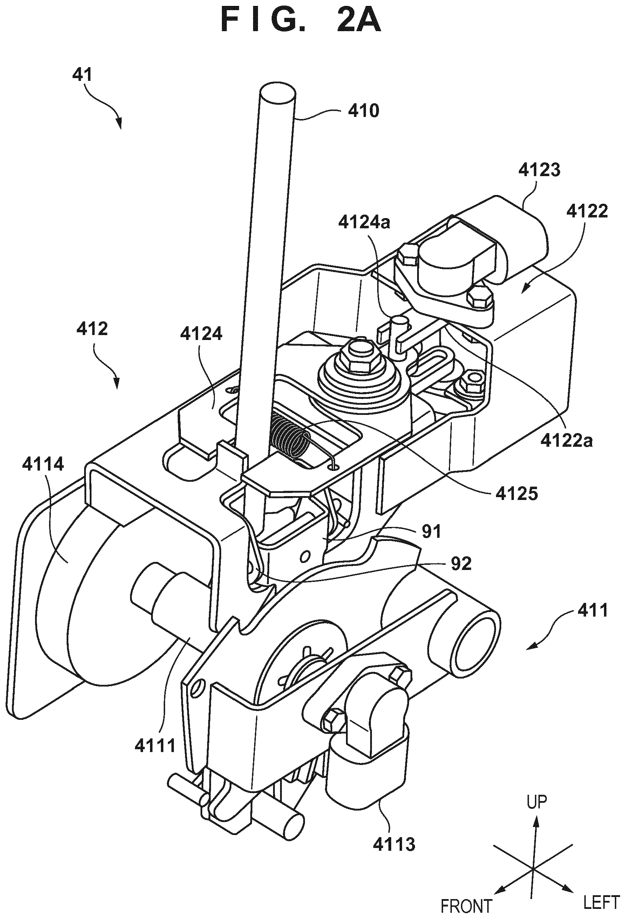

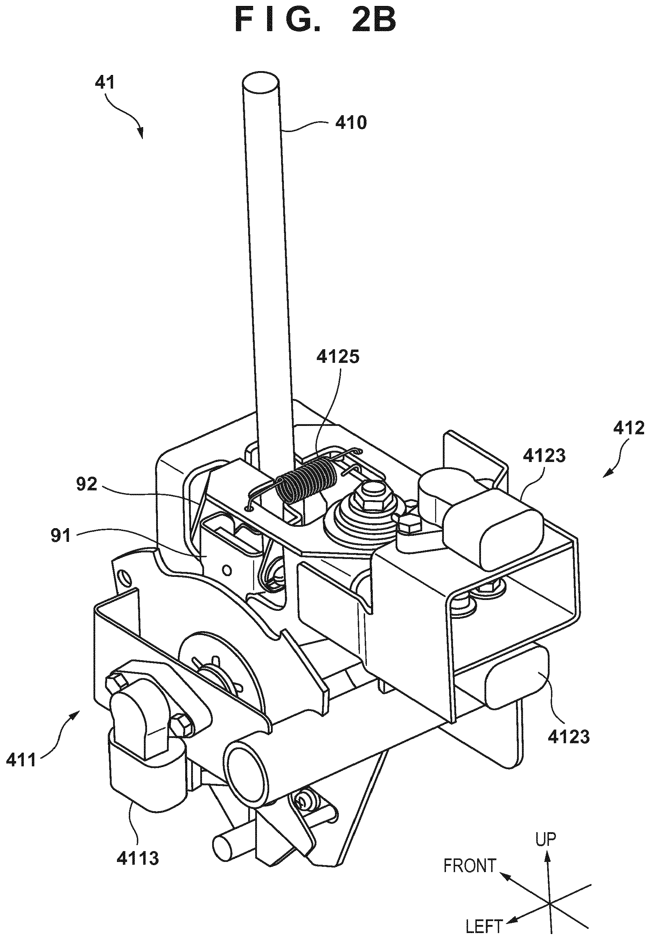

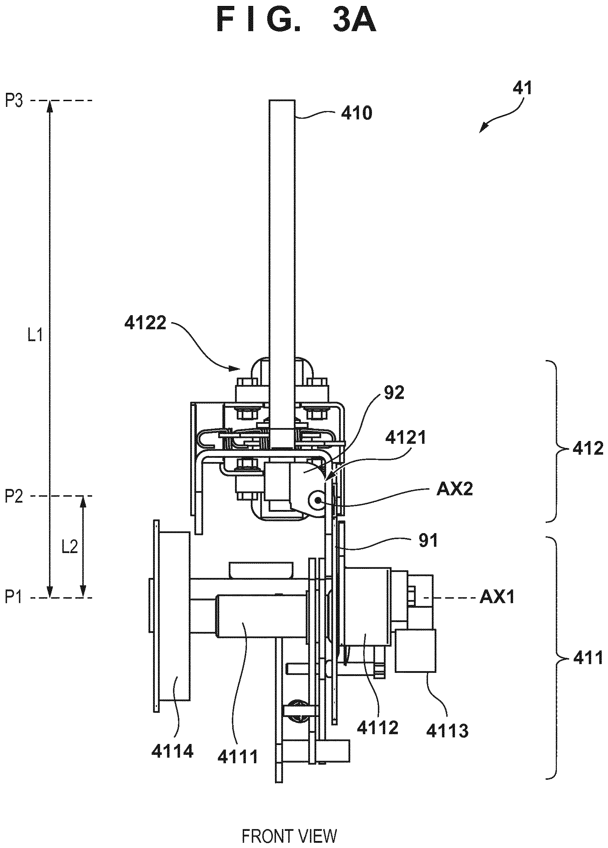

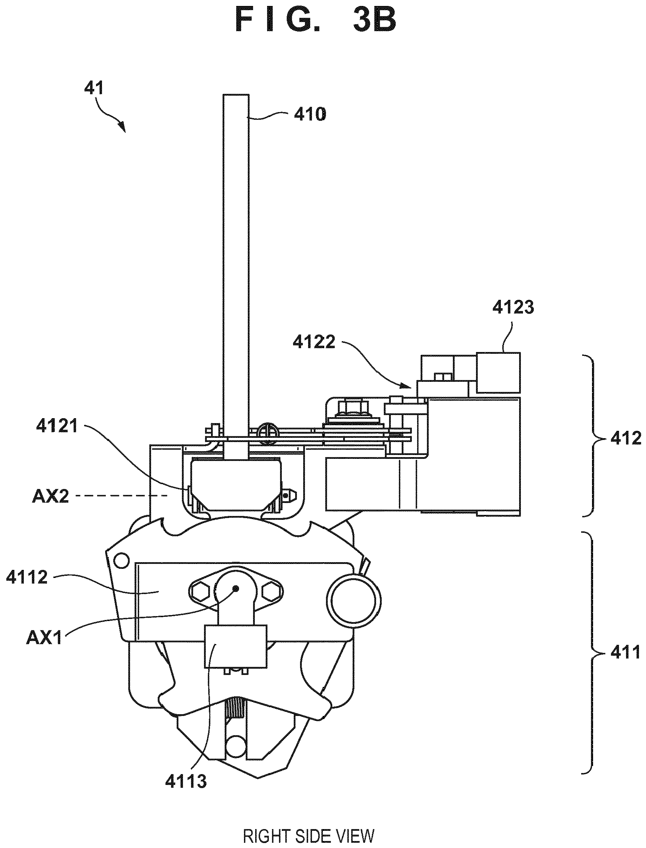

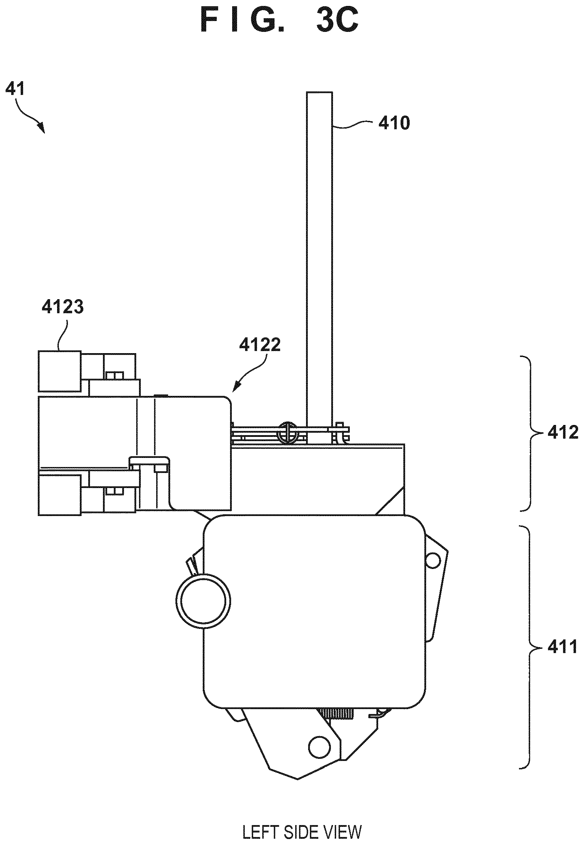

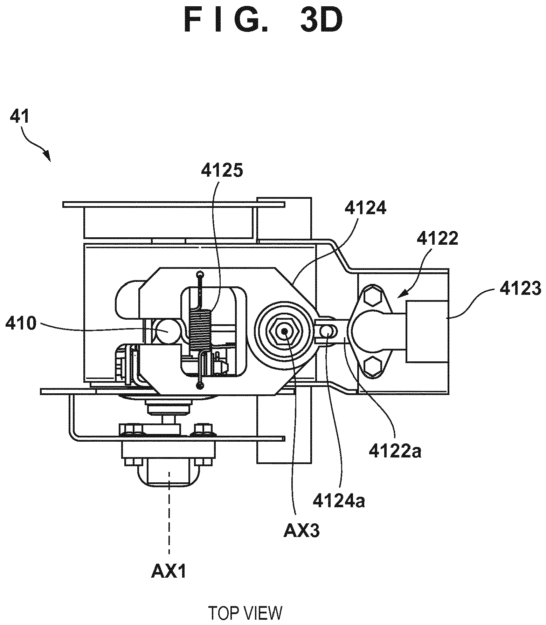

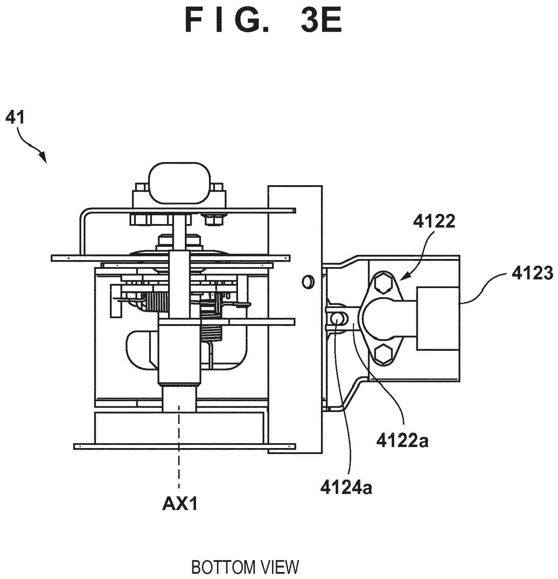

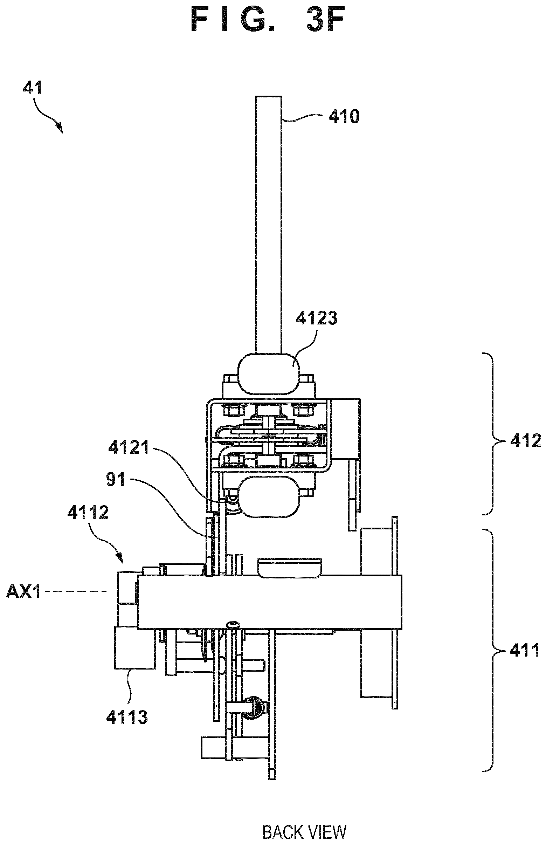

Figs. 2A and 2B are perspective views of the handlebar 41. Figs. 3A to 3F show six side views concerning the handlebar 41. Fig. 3A corresponds to a front view, Fig. 3B corresponds to a right side view, Fig. 3C corresponds to a left side view, Fig. 3D corresponds to a top view (plan view), Fig. 3E corresponds to a bottom view, and Fig. 3F corresponds to a back view. Note that in this specification, expressions such as front/rear, left/right (lateral), and upper/lower represent relative positional relationships with reference to the vehicle body.

In this embodiment, the handlebar 41 includes a handlebar body 410, a rotation mechanism 411, and a rotation mechanism 412. The handlebar body 410 is a rod-shaped member extending in the upward-downward direction. The user directly grips and rotates the handlebar body 410, thereby performing the driving operation of the working machine 1. A grip portion may be provided at the upper end of the handlebar body 410 to facilitate the grip of the user.

The rotation mechanism 411 is a front-back direction rotation mechanism configured to rotate the handlebar body 410 in the front-back direction. The rotation mechanism 411 includes a shaft portion 4111, a sensor portion 4112, a harness portion 4113, and a handlebar position fixing portion 4114. The rotation mechanism 412 is a left-right direction rotation mechanism configured to rotate the handlebar body 410 in the left-right direction. The rotation mechanism 412 includes a shaft portion 4121, a sensor portion 4122, a harness portion 4123, a grip portion 4124, and a spring portion 4125. In this embodiment, the rotation mechanism 412 is arranged on the rotation mechanism 411.

As shown in Fig. 3A and the like, the handlebar body 410 is fixed, at its lower end, to the rotation mechanism 412 via a bracket 92, and can rotate in the left-right direction using an axis AX2 of the shaft portion 4121 as the rotation axis. In addition, the rotation mechanism 412 is fixed to the rotation mechanism 411 via an almost L-shaped bracket 91 in the front view (at the viewpoint of Fig. 3A), and can rotate in the front-back direction using an axis AX1 of the shaft portion 4111 as the rotation axis. That is, when the rotation mechanism 412 rotates in the front-back direction in accordance with the rotation axis AX1, the handlebar body 410 rotates together in the front-back direction in accordance with the rotation axis AX1. In other words, when the handlebar body 410 is rotated by the rotation mechanism 411 in the front-back direction in accordance with the rotation axis AX1, the rotation mechanism 412 rotates together with the handlebar body 410 in the front-back direction in accordance with the rotation axis AX1. This arrangement allows the user to rotate the handlebar body 410 in both the front-back direction and the left-right direction.

In the rotation mechanism 411, the sensor portion 4112 detects the rotation angle of the bracket 91 with respect to the shaft portion 4111, and outputs the detection result as the operation amount of the handlebar body 410 in the front-back direction to the control unit 5 by the harness portion 4113. The control unit 5 drives and controls the traveling unit 3 based on the signal from the sensor portion 4112 obtained via the harness portion 4113, and advances/retreats the working machine 1.

The harness portion 4113 is preferably arranged not to impede the operation of the user on the driver's seat. In this embodiment, a connecting portion provided to connect (or insert/remove) the harness portion 4113 to (into/from) the rotation mechanism 411 corresponds to an output portion configured to output the detection result of the sensor portion 4112. The connecting portion is provided at the left-side end of the rotation mechanism 411 to face the lower side of the vehicle body. This allows the harness portion 4113 to be arranged so as to extend downward from the connecting portion. As another example, the connecting portion may be provided at the right-side end of the rotation mechanism 411. The connecting portion need only be provided at one end in the left-right direction, or may be arranged at a position of the handlebar 41 on the opposite side of the driver's seat.

Additionally, in the rotation mechanism 412, the grip portion 4124 is formed by a pair of swing arms having an almost C shape in a planar view (at the viewpoint of Fig. 3D) in this embodiment. This grips the handlebar body 410. The spring portion 4125 is connected to the grip portion 4124. Accordingly, a biasing force is applied to the grip portion 4124 and the handlebar body 410 such that the handlebar body 410 approaches the home position (a position where the operation amount is zero or neutral). In this embodiment, a coil spring is used as the spring portion 4125. The coil spring is laid on the pair of swing arms serving as the grip portion 4124. For example, when the user holding the handlebar body 410 stops applying a force to the handlebar body 410 in the left-right direction, the handlebar body 410 receives the biasing force from the spring portion 4125 and returns to the home position.

Additionally, as is apparent from the top view of Fig. 3D, the grip portion 4124 can rotate about an axis AX3 serving as a rotation axis. When the handlebar body 410 rotates in the left-right direction, the grip portion 4124 accordingly rotates in accordance with the rotation axis AX3.

Here, an extended portion 4124a extending in the upward-downward direction is provided at the base of the grip portion 4124. In addition, an engaging portion 4122a that engages with the extended portion 4124a is provided on the sensor portion 4122. Hence, when the handlebar body 410 rotates in the left-right direction, and the grip portion 4124 rotates in accordance with the rotation axis AX3, the extended portion 4124a also rotates in accordance with the rotation axis AX3, and the engaging portion 4122a also moves or swings accordingly.

The sensor portion 4122 detects the rotation angle of the grip portion 4124 according to the rotation axis AX3 based on the moving amount of the engaging portion 4122a, and outputs the detection result as the operation amount of the handlebar body 410 in the left-right direction to the control unit 5 by the harness portion 4123. The control unit 5 drives and controls the traveling unit 3 based on the signal obtained from the sensor portion 4122 via the harness portion 4123 and turns the working machine 1 leftward/rightward.

The harness portion 4123 is preferably arranged not to impede the operation of the user on the driver's seat. In this embodiment, a connecting portion provided to connect (or insert/remove) the harness portion 4123 to (into/from) the rotation mechanism 412 corresponds to an output portion configured to output the detection result of the sensor portion 4122. The connecting portion is provided at the rear end of the rotation mechanism 412 to face the rear side of the vehicle body. This allows the harness portion 4123 to be arranged so as to extend backward from the connecting portion. As another example, the connecting portion may be provided at the front end of the rotation mechanism 412. The connecting portion need only be provided at one end in the front-back direction, or may be arranged at a position of the handlebar 41 on the opposite side of the driver's seat.

Here, as is apparent from the bottom view of Fig. 3E, in this embodiment, the extended portion 4124a and the engaging portion 4122a are arranged on the lower side of the grip portion 4124 as well. This can prevent the engaging portion 4122a from being twisted and moved at the time of the rotation of the extended portion 4124a and improve the accuracy of detection of the rotation angle of the grip portion 4124 by the sensor portion 4122.

In this embodiment, a pair of harness portions 4123 are arranged in the upward-downward direction, as can be seen from, for example, Fig. 2B, so as to correspond to the above-described arrangement of the extended portion 4124a and the engaging portion 4122a respectively arranged on the upper and lower sides of the grip portion 4124. When the pair of harness portions 4123 are juxtaposed in the upward-downward direction, the width of the rotation mechanism 412 in the left-right direction can be decreased, and the rotation mechanism 412 can be made compact.

Note that in this embodiment, a pair of swing arms are used as the grip portion 4124. However, another mechanism configured to be able to grip or sandwich the handlebar body 410 may be used. Additionally, in this embodiment, a coil spring is used as the spring portion 4125. However, another elastic member may be used, and the spring portion 4125 need only be configured to be able to provide a biasing force to the handlebar body 410. Alternatively, the grip portion 4124 and the spring portion 4125 may be formed by integral/separate elastic members.

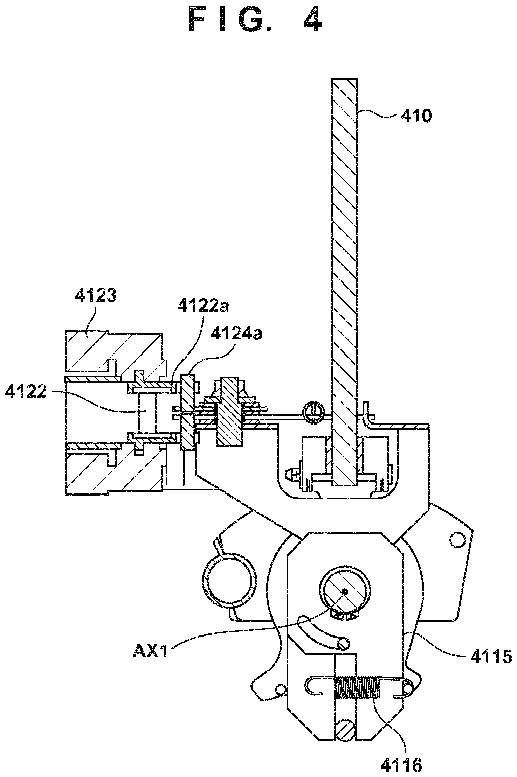

Fig. 4 is a sectional view of the handlebar 41 and shows the sectional structure of a plane passing through the handlebar body 410 at the same viewpoint as in Fig. 3C. The rotation mechanism 411 further includes a grip portion 4115 and a spring portion 4116. The grip portion 4115 and the spring portion 4116 have the same functions as the grip portion 4124 and the spring portion 4125. The rotation mechanism 411 applies a biasing force to the bracket 91 by the grip portion 4115 and the spring portion 4116 such that the handlebar body 410 approaches the home position. For example, when the user holding the handlebar body 410 stops applying a force to the handlebar body 410 in the front-back direction, the handlebar body 410 receives the biasing force from the spring portion 4116 via the grip portion 4115 and returns to the home position.

Here, the handlebar position fixing portion 4114 is arranged on the axis AX1 (see Figs. 2A and 3A) and configured to engage with the bracket 91 or suppress the rotation of the bracket 91 according to the rotation axis AX1. In this embodiment, an electromagnetic brake is used as the handlebar position fixing portion 4114. However, another engaging mechanism or rotation suppression mechanism may be used. The operation (active/inactive) of the handlebar position fixing portion 4114 can be controlled by, for example, a predetermined operation element of the operation unit 4. In general, the working machine such as a lawn mower or a snow plow often performs a work while advancing at an almost predetermined speed. Hence, during the work, the user can fix the operation amount of the handlebar body 410 in the front-back direction by the handlebar position fixing portion 4114.

In this embodiment, the handlebar body 410 is fixed to the rotation mechanism 412 via the bracket 92, and the rotation mechanism 412 is fixed to the rotation mechanism 411 via the bracket 91. That is, when the handlebar body 410 is rotated in the front-back direction by the rotation mechanism 411, the rotation mechanism 412 rotates in the front-back direction together with the handlebar body 410. According to this embodiment, since the rotation of the handlebar body 410 in the front-back direction and the rotation in the left-right direction do not interfere with each other, the operation amount of the handlebar body 410 in the front-back direction and the operation amount in the left-right direction can independently be changed or adjusted.

The working machine often performs a work while advancing at an almost predetermined speed. Additionally, the working machine is often required to turn while maintaining an almost predetermined speed. In the case of a handlebar that uses a ball screw for the rotation axis as an example of a typical conventional structure, when the handlebar body is rotated in the front-back direction and also rotated in the left-right direction in this state, the operation amount of the handlebar body in the front-back direction may vary along with the rotation in the left-right direction. However, according to this embodiment, the user can change or adjust the operation amount of the handlebar body 410 in the left-right direction while maintaining the operation amount in the front-back direction. Hence, according to this embodiment, the operability of the handlebar 41 by the user can be improved, and the handlebar 41 can suitably be applied to the working machine 1.

As another embodiment, the positional relationship of the rotation mechanisms 411 and 412 in the upward-downward direction can be reversed. In this embodiment, the rotation mechanism 412 is located above the rotation mechanism 411 and fixed to the rotation mechanism 411. According to this arrangement, when the diameter of rotation of the handlebar body 410 in the front-back direction is R_{FR}, and the diameter of rotation of the handlebar body 410 in the left-right direction is R_{LR}, R_{FR} > R_{LR} holds. In general, the ratio of the advancing/retreating operation is higher than that of the turning operation. Hence, when R_{FR} > R_{LR}, the user can perform an operation with little sense of incongruity using the handlebar 41.

In addition, as shown in Fig. 3A, let P1 be the position (height) of the axis AX1 in the upward-downward direction, P2 be the position of the axis AX2 in the upward-downward direction, and P3 be the position of the upper end of the handlebar body 410. Here, when the distance between P1 and P3 is L1, and the distance between P1 and P2 is L2, L2 is set to be not more than 50% (preferably not more than 45% and more preferably not more than 40%) of L1. This can provide an operation with less sense of incongruity to the user without unnecessarily increasing the difference between the above-described diameters R_{FR} and R_{LR}. Note that the diameters R_{FR} and R_{LR} can be expressed using the distances L1 and L2 as R_{FR} = L1 and R_{LR} = L1 - L2.

When additionally providing a grip portion at the upper end of the handlebar body 410, letting L3 be the distance between the position P1 and the lower end of the grip portion, L2 is set to be not more than 45% (preferably not more than 40% and more preferably not more than 35%) of L3.

Several preferred embodiments have been described above. However, the present invention is not limited to these examples and may partially be modified without departing from the scope of the invention. Individual terms described in this specification are merely used for the purpose of explaining the present invention, and the present invention is not limited to the strict meanings of the terms and can also incorporate their equivalents.

The summary of the above-described embodiment will be described below.

In the first aspect, there is provided a handlebar (for example, 41) for a working machine, comprising a handlebar body (for example, 410), a first rotation mechanism (for example, 411) configured to rotate the handlebar body in a first direction (for example, vehicle front-back direction), and a second rotation mechanism (for example, 412) configured to rotate the handlebar body in a second direction (for example, vehicle left-right direction) crossing the first direction, wherein the handlebar body is fixed to the second rotation mechanism so as to be rotatable in the second direction, and the second rotation mechanism is fixed to the first rotation mechanism so as to be rotatable in the first direction.

According to the first aspect, the operation amount of the handlebar body in the second direction can be changed or adjusted while maintaining the operation amount in the first direction, and the operability of the handlebar for the user improves.

In the second aspect, the first direction is a vehicle front-back direction, and the second direction is a vehicle left-right direction.

According to the second aspect, since the rotation mechanism in the left-right direction is located above the rotation mechanism in the front-back direction, the relationship between the diameter R_{FR} of the rotation of the handlebar body in the front-back direction and the diameter R_{LR} of the rotation in the left-right direction satisfies R_{FR}>R_{LR}. In the working machine, generally, the ratio of the advancing/retreating operation is higher than that of the turning operation. Hence, according to the second aspect, it is possible to provide an operation with little sense of incongruity to the user.

In the third aspect, when a rotation axis of the handlebar body in the vehicle front-back direction in the first rotation mechanism is defined as a first axis (for example, AX1), and a rotation axis of the handlebar body in the vehicle left-right direction in the second rotation mechanism is defined as a second axis (for example, AX2), the first rotation mechanism and the second rotation mechanism are arranged such that a distance (for example, L2) from the first axis to the second axis in a vehicle upward-downward direction becomes not more than 50% of a distance (for example, L1) from the first axis to an upper end of the handlebar body in the vehicle upward-downward direction.

According to the third aspect, it is possible to provide an operation with less sense of incongruity to the user.

In the fourth aspect, a grip portion (for example, 4124) configured to grip the handlebar body is provided on the second rotation mechanism, and the grip portion is configured to be able to provide a biasing force in the second direction to the handlebar body such that the handlebar body rotated in the second direction returns to a home position.

According to the fourth aspect, an arrangement for readily returning the handlebar body to the home position can be obtained, and the operability further improves. For example, the user can interrupt the turn of the working machine and resume the advance/retreat of the working machine only by reducing the force applied to the handlebar body in the left-right direction.

In the fifth aspect, the grip portion comprises a pair of swing arms (for example, 4124).

According to the fifth aspect, an arrangement for readily gripping the handlebar body can be obtained, and the biasing force can be provided to the handlebar body with a relatively simple arrangement.

In the sixth aspect, a spring portion (for example, 4125) is laid on the pair of swing arms, and the spring portion provides the biasing force to the handlebar body.

According to the sixth aspect, providing of the biasing force to the handlebar body can be implemented by a relatively simple arrangement.

In the seventh aspect, there is provided a working machine (for example, 1) comprising the above-described handlebar, and a working unit (for example, 2) configured to perform a work.

According to the seventh aspect, the handlebar can be applied to a variety of working machines such as a lawn mower and a snow plow, and accordingly, the operability can be improved. Note that an example of the vehicle type of the working machine is an autonomously traveling type including a driver's seat. However, a hand push type is also possible.

In the eighth aspect, the working machine further comprises a control unit (for example, 5) configured to control the working unit based on an operation form of the handlebar body, the first direction is a vehicle front-back direction, and the second direction is a vehicle left-right direction, the first rotation mechanism further comprises a first sensor portion (for example, 4112) configured to detect an operation amount of the handlebar body in the vehicle front-back direction and a first output portion (for example, the connecting portion of the harness portion 4113) configured to output a detection result by the first sensor portion to the control unit, and the first output portion is provided at one end (for example, left-side end) of the first rotation mechanism in the vehicle left-right direction such that a connecting portion of the first output portion faces a lower side of a vehicle body.

According to the eighth aspect, the harness portion (for example, 4113) can be arranged not to impede the operation of the user on the driver's seat.

In the ninth aspect, the working machine further comprises a control unit (for example, 5) configured to control the working unit based on an operation form of the handlebar body, the first direction is a vehicle front-back direction, and the second direction is a vehicle left-right direction, the second rotation mechanism further comprises a second sensor portion (for example, 4122) configured to detect an operation amount of the handlebar body in the vehicle left-right direction, and a second output portion (for example, the connecting portion of the harness portion 4123) configured to output a detection result by the second sensor portion to the control unit, and the second output portion is arranged at one end (for example, rear end) of the second rotation mechanism in the vehicle front-back direction.

According to the ninth aspect, the harness portion (for example, 4123) can be arranged not to impede the operation of the user on the driver's seat.

In the 10th aspect, a pair of second output portions are juxtaposed in a vehicle upward-downward direction at the one end of the second rotation mechanism such that a connecting portion of the second output portion faces a rear side of a vehicle body.

According to the 10th aspect, when the pair of harness portions (for example, 4123) are juxtaposed in the vehicle upward-downward direction, the width of the rotation mechanism in the vehicle left-right direction can be decreased, and the second rotation mechanism can be made compact.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A handlebar (41) for a working machine (1), comprising:
a handlebar body (410);
a first rotation mechanism (411) configured to rotate the handlebar body in a first direction; and
a second rotation mechanism (412) configured to rotate the handlebar body in a second direction crossing the first direction,
wherein the handlebar body is fixed to the second rotation mechanism so as to be rotatable in the second direction, and the second rotation mechanism is fixed to the first rotation mechanism so as to be rotatable in the first direction.

2. The handlebar according to claim 1, wherein the first direction is a vehicle front-back direction, and
the second direction is a vehicle left-right direction.

3. The handlebar according to claim 2, wherein when a rotation axis of the handlebar body in the vehicle front-back direction in the first rotation mechanism is defined as a first axis (AX1), and a rotation axis of the handlebar body in the vehicle left-right direction in the second rotation mechanism is defined as a second axis (AX2),
the first rotation mechanism and the second rotation mechanism are arranged such that a distance (L2) from the first axis to the second axis in a vehicle upward-downward direction becomes not more than 50% of a distance (L1) from the first axis to an upper end of the handlebar body in the vehicle upward-downward direction.

4. The handlebar according to claim 1, wherein a grip portion (4124) configured to grip the handlebar body is provided on the second rotation mechanism, and
the grip portion is configured to be able to provide a biasing force in the second direction to the handlebar body such that the handlebar body rotated in the second direction returns to a home position.

5. The handlebar according to claim 4, wherein the grip portion comprises a pair of swing arms (4124).

6. The handlebar according to claim 5, wherein a spring portion (4125) is laid on the pair of swing arms, and the spring portion provides the biasing force to the handlebar body.

7. A working machine (1) comprising:
a handlebar (41) of claim 1; and
a working unit (2) configured to perform a work.

8. The machine according to claim 7, further comprising a control unit (5) configured to control the working unit based on an operation form of the handlebar body,
wherein the first direction is a vehicle front-back direction, and the second direction is a vehicle left-right direction,
the first rotation mechanism further comprises:
a first sensor portion (4112) configured to detect an operation amount of the handlebar body in the vehicle front-back direction; and
a first output portion configured to output a detection result by the first sensor portion to the control unit, and
the first output portion is provided at one end of the first rotation mechanism in the vehicle left-right direction such that a connecting portion of the first output portion faces a lower side of a vehicle body.

9. The machine according to claim 7, further comprising a control unit (5) configured to control the working unit based on an operation form of the handlebar body,
wherein the first direction is a vehicle front-back direction, and the second direction is a vehicle left-right direction,
the second rotation mechanism further comprises:
a second sensor portion (4122) configured to detect an operation amount of the handlebar body in the vehicle left-right direction; and
a second output portion configured to output a detection result by the second sensor portion to the control unit, and
the second output portion is arranged at one end of the second rotation mechanism in the vehicle front-back direction.

10. The machine according to claim 9, wherein a pair of second output portions are juxtaposed in a vehicle upward-downward direction at the one end of the second rotation mechanism such that a connecting portion of the second output portion faces a rear side of a vehicle body.
